# EUROPEAN PATENT SPECIFICATION

(11) **EP 1 367 743 B1**
(45) Date of publication and mention of the grant of the patent: **25.07.2007**
(21) Application number: 02360156.0
(22) Date of filing: 29.05.2002
(51) Int. Cl.: H04B 10/18, G02B 6/34

(54) **Polarisation mode dispersion compensator**
Polarisationsmodendispersionkompensator
Compensateur de la dispersion modale de polarisation

(43) Date of publication of application: 03.12.2003
(73) Proprietor: Alcatel Lucent, 75008 Paris (FR)
(72) Inventor: Corbel, Erwan, 92340 Bourg-La-Reine (FR); Lanne, Stéphanie, 75014 Paris (FR); Thiery, Jean-Pierre, 78180, Montigny Le-Bretonneux (FR)
(74) Representative: Schmidt, Werner Karl

(56) References cited:
- EP-A- 1 170 890
- WO-A-01/61385

## Description

### BACKGROUND TO THE INVENTION

The invention relates to a device for compensation of polarization mode dispersion for an optical transmission system with transmitter, transmission link and receiver, comprising a mean for controlling the polarization, a mean for delaying the differential group velocities of the polarization modes, a tap for tapping part of the signal to an analyze measuring a degree of polarization, a controlling mean running an algorithm to calculate parameters and the output of the controlling mean is connected to the mean for controlling the polarization and the algorithm restarts to calculate parameters for the means of controlling the polarization when a measured degree of polarization is under a fixed threshold.

The invention further related to a method for compensation of polarization mode dispersion comprising following steps:
Measuring the degree of polarization of a signal at the receiver
Running an algorithm to find the maximum of degree of polarization
Comparing the degree of polarization with reference values of the compensation system in a data base
Switching the new starting point to the opposite side of the Poincare Sphere, when the reference value is under a definite threshold value
Selecting the new starting point from the data base

Existing communications systems typically rely for transmission over long distances upon the use of nominally single mode optical fibers which carry optical signals and provide transmission of signal data at 10 Gbit/s or more over distances of the order of 100 km. Although such fibers are nominally single mode, propagation of optical signals is generally characterized in such fibers by two orthogonally polarized modes for which slightly different group velocities exist in the presence of birefringence. For a given span of optical fiber, the difference in transmission time for these modes is termed polarization mode dispersion. For the given span of optical fiber, it is possible to define a pair or orthogonal principal polarization states such that an optical pulse launched into the fiber in only one of the principal polarization states will be received at the other end of the fiber without polarization mode dispersion being evident, the principal polarization states therefore representing the fast and slow axis modes of propagation. In practical systems however, it is difficult to control the launch state to always correspond to one of the principal polarization states so that an optical signal typically comprises the sum of fast and slow mode components. Environmental factors affecting the optical fiber produce variation over time in the birefringence effects causing polarization mode dispersion and the resulting dispersion is observed to vary relatively slowly for fibers in buried cables and more quickly for fibers contained in overhead cables.

There will be two polarization modes supported by a single mode transmission fiber. There is a group delay between these two eigen-modes, also knows as the principal states of polarization (PSP). If the input polarization is aligned with one of the PSPs, then the output polarization will remain in the same PSP. However, for arbitrary input polarizations, the output will consist of both PSPs, with a certain amount of delay (in time) between them. It is this differential group delay (DGD) that causes waveform distortion. In order to compensate for PMD, it is necessary to find the PSPs at the output so that a polarization splitter can be used to separate the two PSPs.

In the prior art, there are three basic categories of techniques used for polarization mode dispersion (PMD) compensation: (1) all-optical; (2) all-electrical; and (3) hybrid optical-electrical. For all-optical PMD compensation, the restoration of PMD distortion is performed optically and usually consists of a polarization converter coupled to a section of polarization maintaining fiber, or to a combination of a polarization converter, polarization beam splitter, a fixed and variable delay element and a combiner. One of the goals is to find the PSPs and align their axes to those of the PSPs. Another goal is ,in the case a fixed DGD by a element as a polarization maintaining fiber is used, to adjust the DGD with variable elements. However, this is difficult to achieve since the principal states of polarization and the differential group delay (DGD) are not directly measured, and any optimization algorithm that is used to set the polarization converter and the variable delay element may converge to a local optimum .

In a conventional all-electrical method, the distorted optical signal is first converted to an electrical signal at the receiver. A delay line filter with specific weights is then used to partially compensate for the distortion due to PMD. An exemplary hybrid technique may utilize a polarization controller and a section of polarization maintaining fiber. A high-speed photo-detector is used to convert the optical signal into an electrical representation. An electrical tapped delay line filter is then used to adjust the frequency-dependent phase of the electrical signal.

It is known from U.S. Pat. No. 5473457, to analyze a received optical signal in a manner which permits the principal states of polarization to be determined and the received pulse separated into fast and slow mode components, the fast mode component then being subject to a compensating delay by means of transmission of both components through a polarization maintaining optical fiber of predetermined length and high polarization dispersion to provide a differential delay. This technique however has the disadvantage of making available only a fixed amount of compensation and therefore does not allow variable compensation of polarization mode dispersion suitable for a practical communications system. A further disadvantage is that a delay element providing optical delay by transmission via a fiber will typically require a relatively long length of fiber in the range 10 to 100 meters.

It is known from WO 97/50185 to compensate for polarization mode dispersion by splitting the received optical signal at the receiver into two polarization states and to apply switched delays of different length to the separated components, thereby providing a variable delay. A disadvantage of this system is that the delay is not continuously and smoothly variable and also requires a relatively complex optical switching configuration.

It is also known from non published FR 01 11 133 to compensate the polarization dispersion to which an emitted light signal is subject while being transmitted over an optical link . The device includes a polarization controller, means for generating a differential delay between two orthogonal polarization modes, and servo-control means for the polarization controller for transforming the signal conveyed over the link into a compensated light signal. The device also includes auxiliary compensation means suitable for modifying the polarization state of the emitted light signal if the quality of the compensated light signal remains below a reference quality. This solution provide a good control of the state of polarization . This prior art solution needs to implement a feedback loop along the transmission line and two polarization controller at the transmitter and the receiver side.

Also in EP-A-1170890 a polarization mode dispersion method is known which employs a feedback loop to implement an algorithm and incorporates a birefringent element having a fixed angle and a variable rotation angle as represented on a poincaré sphere.

### SUMMARY OF THE INVENTION

The scope of this invention is to avoid feed back loops and expensive control units and to achieve a good result of polarization control with an algorithm that runs the control of the single polarization controller.

The invention solves the problem by using a device (5) for compensation of polarization mode dispersion for an optical transmission system with transmitter, transmission link and receiver, comprising
a mean for controlling the polarization (7),
a mean for delaying the differential group velocity of orthogonal polarization modes
a tap (12) for tapping part of the signal to an analyzer (13) measuring a degree of polarization

A controlling mean (10) running an algorithm to calculate parameters and the output of the controlling mean (10) is connected to the mean for controlling the polarization (7)

The algorithm restarts to calculate parameters for the mean of controlling the polarization when a measured degree of polarization is under a fixed threshold.

The advantage of this solution is that when the controller runs the algorithm often a local maximum of degree of polarization is reached. The local maximum on a Poincare sphere lies on the opposite side to the absolute maximum of the degree of polarization. Supposing the algorithm has found a local maximum the system must be triggered to restart calculation with a new starting point. The new starting point lies at the opposite side of the Poincare sphere. This trigger event for restart calculation is that the measure value of the degree of polarization is under a definite threshold. The value of the threshold is selected to be more than the local maximum and less than the absolute maximum of degree of polarization.

This method is realized in the steps:
Measuring the degree of polarization of a signal at the receiver
Running an algorithm to find the maximum of degree of polarization
Comparing the degree of polarization with reference values of the compensation system in a data base
Switching the new starting point to the opposite side of the Poincare Sphere, when the reference value is under a definite threshold value

Selecting the new starting point from the data base.

This scheme does not need any additional polarization converter nor feedback loop going from receiver to emitter. The pre-characterization that is required does not need to be systematic if devices are reproducible.

The inventional method implies an abrupt change of state of polarization which can lead to a severe degradations of performance until the new maximum is found. Nevertheless the polarization controller is able to reach any points on the Poincaré sphere within 1 ms. Moreover the solution avoids deleterious stagnation on a bad maximum.

### DESCRIPTION OF THE INVENTION

The solution of the invention is shown in the figures and described in the following description.
Fig 1 shows a principle device for compensation
Fig.2 the Stokes representation of the main DGD
Fig. 3 result of different algorithms
Fig. 4 Comparison of penalties with different algorithm.

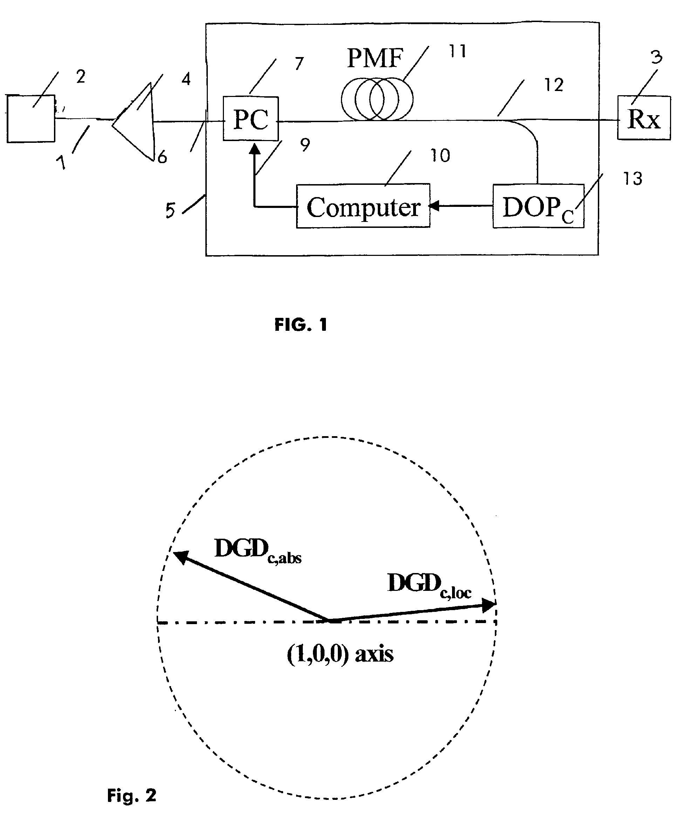

In FIG. 1, an optical fiber 1 provides a transmission path for propagation of an optical signal from a polarized light emitting transmitter 2 to a receiver 3, this transmission path including an erbium doped optical fiber amplifier 4 and, adjacent the receiver 3, a PMD (polarization mode dispersion) compensator 5. The compensator comprises a Polarization controller 7 linked to a polarization maintaining fiber (11). A tap 12 is connected to a analyzer 13 to measure the degree of polarization . The analyzer is linked to a computer 10 and this computer to the polarization controller 7.

The optical fiber 1 is a nominally circularly symmetric single mode fiber extending over a substantial distance, which in the present example is 100 km. Over a distance of this length the departures from perfect circular symmetry of that fiber, for example as a result of bending strain, are liable to be of a sufficient magnitude for the fiber to function as a concatenation of birefringent elements of random relative orientation. Moreover that orientation is liable to change with time. When polarized light of any particular wavelength is transmitted through a single element exhibiting uniform birefringence, that light is, in general, resolved into two components (modes) propagating with two specific different velocities, and so possessing different transit times of propagation through that element. For each of two particular orthogonal states of polarization (PSPs), known as the principal PSPs, the light is not resolved into different components, but propagates at a single velocity with a single transit time, i.e. propagates as a single (polarization) mode.

PSPs are key parameters of the fiber independently of the light that undergoes PMD, whatever the modulation format, bit rate etc... PSPs are defined for a given fiber. One can speak about input PSP or output PSP but they are representative of the same reality. One passes from input to output thanks to a change of frame. They are useful to know how the signal will be affected by PMD.

For definition of the wording: principal axes refers to birefringence axis those of the fibers which can be z-dependant and principal state refers to special states of polarization wrt PMD.

Birefringence and PMD are dual in space and frequency field. Birefringence makes the state of polarization change along the propagation whereas PMD makes the state of polarization change over the width of signal spectrum. When one converts that frequency depolarization in the time domain, one finds that energy on each PSP arrives with a differential delay. Roughly speaking how to get the difference between principal axes and PSP is to say that the principal axes enable the state of polarization to be fixed with delta_z (along the transmission) whereas PSP enables the state of polarization to be fixed in frequency. The fact that every frequency of the spectrum has the same polarization makes the energy travel at the same speed, but the state of polarization can change during propagation.

The use of a polarization controller and a polarization maintaining fiber results in the concatenation of two birefringent elements.To assess performance of the system with PMD, we always compare the PMD vector (whose magnitude is DGD) and the state of polarization. The aim of compensation consists in changing the total PMD vector in order to either make the total PMD vector be zero vector or make the concatenation of two vectors be aligned with state of polarization. The latter comparison can be done at the input of the fiber by comparison between input state of polarization and input PSP, or at the output by comparison between output state of polarization and output PSP, but this is the same.

As shown in FIG. 1, the input 6 of the PMD compensator 5 is connected, within the compensator to a polarization controller 7 operable to introduce a controlled amount of change of PSP from that received at input 6. The amount of change of PSP induced by polarization controller 7 is regulated by a control signal 9 from a controller 10 .

In the picture of Poincare spheres: each state of polarization can be represented by a point and PMD conditions (PSP) by a vector Ω whose magnitude represents DGD. This sphere shows the deviation from the principle states of polarization represented by the Stokes vector S. The Stokes vector with the 4 Stokes parameters allows a definition of the actual state of polarization and the degree of polarization. The principle compensation tool needs a mean that represents a delay in the differential group velocity . This retarding element is also represented in a compensating vector Ωc. As a result the vector Ω and the compensating vector Ωc will result in a parallel vector to the Stokes vector S or in a zero function.

In the practical solutions an additional differential group delay is implemented by using a polarization maintaining fiber , which assures a delay of the same amount as the maximum delay that must be compensated.

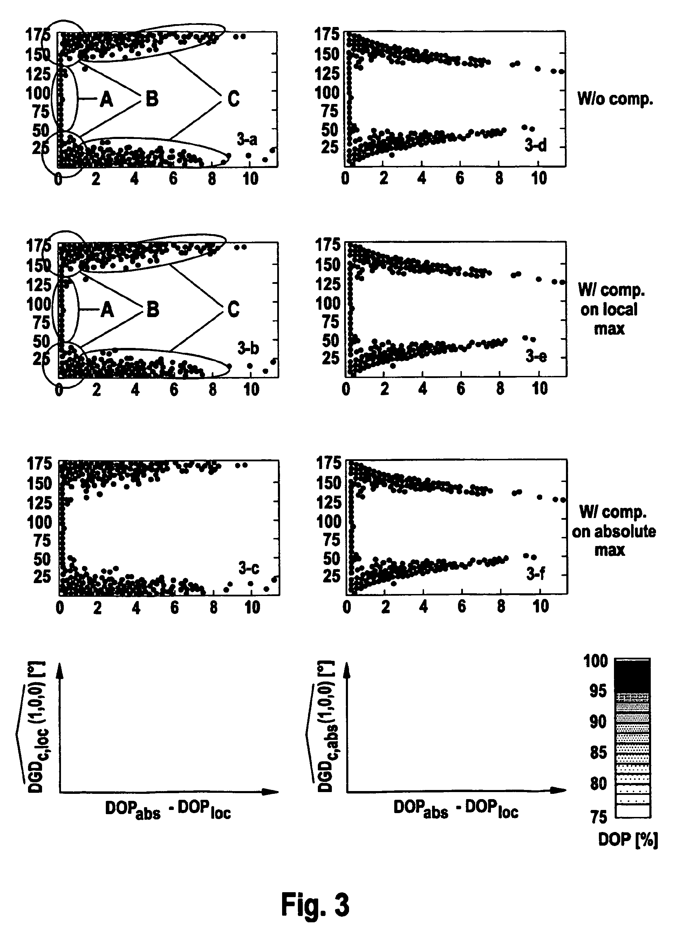

To make the purpose of the inventional algorithm to be clear, the result will be discussed in the Poincare representation. Starting point is the relative positions of DOP (degree of polarization) maximums on the Poincaré sphere. The frame of reference is conditioned by the PSP of the Polarization Maintaining Fiber (PMF) used in the compensator. The PSP of the polarization maintaining fiber is placed in (1,0,0) on the Poincaré Sphere. By simulations local and absolute maxima of the DOP are separated and identified and represented with Stokes vectors in a planar representation of the Poincare sphere . Figure 2 gives details concerning the notations : DGD_{c,abs} accounts for absolute maximum compensation and DGD_{c,loc} for local maximum compensation (2D-projection Stokes representation).

Fig 3 shows the results: 3-a,b,c : angles between local maximum (**DGD_{c,loc}**) and reference (1,0,0) versus expected improvement of DOP between local maximum and absolute maximum. Shades of points correspond to scale of DOP
w/o compensation (3-a),
with compensation on local maximum (3-b)
and with compensation on absolute maximum (3-c).
3-d,e,f : angles between absolute maximum (**DGD_{c,abs}**) and reference (1,0,0) versus expected improvement of DOP between local maximum and absolute maximum. Shades of points correspond to scale of DOP w/o compensation (3-d), with compensation on local maximum (3-e) and with compensation on absolute maximum (3-f).

These figures leads to several observations :
- The points corresponding to the smallest DOP (region A) before compensation take advantage of compensation. Local and absolute maximum lead to the same value of DOP. They are far away from (±1,0,0).
- The points corresponding to the best DOP (region B) before compensation remain unchanged. They are very close to (±1,0,0).
- We can identify a population of points (region C) for which absolute maximum tracking is very benefic. It corresponds to a local maximum close to (± 1,0,0) and an absolute maximum not so close to - (±1,0,0). Local and absolute maximum are on opposite side of the sphere but they don't face each other. Figure 2 typically corresponds to that case. Actually the greater the improvement is expected to be, the further absolute maximum is from reference axis.
The invention select these points and operates a change of sides on the Poincaré sphere. The region C is characterized by a DOP after local-maximum-based compensation below threshold which can be arbitrarily chosen, depending on the minimal improvement that is addressed. Actually the change of side on the Poincaré sphere consists in selecting the starting point -(±1,0,0) if local maximum of region C is close to (±1,0,0). From our previous discussion we already know that absolute maximum is not necessarily close to the (1,0,0) axis. We consider that the compensator can spend the same amount of time to search for the absolute maximum from the new starting point as the local-maximum tracking.
"(1,0,0)" refers to the a frame of reference grounded on the PMF. A pre-characterization of the couple {polarization controller (PC) + PMF} is needed in order to know how to switch hemispheres. The following method should be followed :
- A database containing voltages that must be applied on PC cells to reach the points (1,0,0) and (-1,0,0) with respect to different input state of polarization would be realized. That pre-characterization only needs a laser, a polarization scrambler, the couple {PC + PMF} and a DOP analyzer. The result is the concatenated PSP in dependence of the launched PSP.
- The pigtail linking PC and PMF should be finely reproducible. It will enable the following pre-characterization of the device to be done only during the conception but not during its implementation.
- During a field operation, a point known to belong to region C (see Figure 3), turns to be close to reference axis (1,0,0). Algorithm interpolates the voltages on cells corresponding to the PSP (±1,0,0) which is the closest w.r.t. our point. Thanks to the database, algorithm will select the new starting point on the other side of the Poincaré sphere.

The inventional method aims to optimize the state of polarization starts with the measurement of degree of polarization of the received line signal. This measurement is done in a conventional polarimeter, which allows to assess the Stokes parameters form the signal after passing the line and the compensation tool with polarization controller and the PMF.

The database only contains sets of voltages that enable reaching the other side of sphere, providing one point. There is no correlation between measured DOP and pre-defined database. DOP measurement just serves to optimize the DOP function and find an optimum, and to decide when one must apply the inversion of side on Poincaré sphere. Then the database is explored: the currently applied voltages are found and linked to the new set of voltage that will enable to reach the other side of the sphere and then be applied to the polarization controller.

If the actual DOP is close to the reference value of the local maximum the algorithm selects from the data base a new starting point which is on the opposite side of the Poincare sphere. The controller can then select the right value for the parameters to drive the polarization controller.

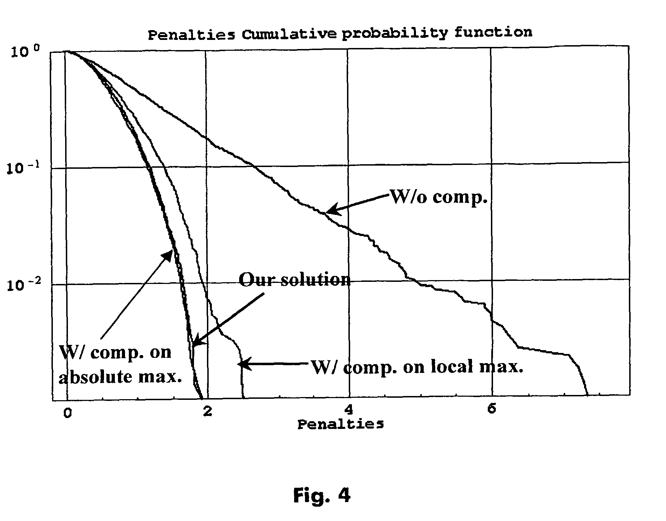

The tracking of absolute maximum has been numerically assessed by systematic scanning of the entire sphere. It enables to increase PMD limit for an outage probability of 10⁻⁵ from 30 to 35 ps. Nevertheless the algorithm searches for absolute maximum only if it seems to be worthy. Figure 4 shows the cumulative probability function for penalties (calculated on Q' factor) due to PMD. These results are based on more than 2000 draws of PMD conditions. Our solution proves to be very close to real-absolute maximum tracking of DOP function. The same improvement of PMD limit is therefore expected.

## Claims

1. Method for compensation of polarization mode dispersion comprising following steps:
- measuring the degree of polarization of a signal at the receiver
- running an algorithm to find the maximum of degree of polarization
- comparing the degree of polarization with reference values of the compensation system in a data base
- switching the new starting point to the opposite side of the Poincare Sphere, when the reference value is under a definite threshold value
- selecting the new starting point from the data base.

2. Method according to claim 1 wherein the reference values of the compensation system are measured and defined in a off-line mode.

3. Method according to claim 1 wherein the threshold for restarting the calculation of compensation is above the local maximum.

4. Method according to claim 1 wherein the value of local maximum can change from one PMD condition to an other one and the value of the threshold depends on the line and on former values.

5. Device (5) for compensation of polarization mode dispersion for an optical transmission system with transmitter, transmission link and receiver, comprising
- a means for controlling the polarization (7)
- a means for delaying the differential group velocities (11) of the orthogonal polarization modes
- a tap (12) for tapping part of the signal to an analyzer (13) adapted to measure a degree of polarization
- a controlling means (10) running an algorithm adapted to calculate parameters where the output of the controlling means (10) is connected to the meansfor controlling the polarization (7) and
- the algorithm is adapted to restart to calculate parameters for the means of controlling the polarization when a measured degree of polarization is under a fixed threshold.

## Patentansprüche

1. Verfahren zur Kompensation der Polarisationsmodendispersion, umfassend die folgenden Schritte:
- Messen des Polarisationsgrads eines Signals am Empfänger;
- Ausführen eines Algorithmus zur Ermittlung des Maximums des Polarisationsgrads;
- Vergleichen des Polarisationsgrads mit Referenzwerten des Kompensationssystems in einer Datenbank;
- Umschalten des neuen Ausgangspunkts auf die entgegengesetzte Seite der Poincaré-Kugel, wenn der Referenzwert unter einem definierten Schwellenwert liegt;
- Auswählen des neuen Ausgangspunkts aus der Datenbank.

2. Verfahren nach Anspruch 1, bei dem die Referenzwerte des Kompensationssystems in einem Offline-Modus gemessen und definiert werden.

3. Verfahren nach Anspruch 1, bei dem der Schwellenwert zum erneuten Starten der Kompensationsberechung über dem lokalen Maximum liegt.

4. Verfahren nach Anspruch 1, bei dem sich der Wert des lokalen Maximums von einer PMD-Bedingung zu einer anderen ändern kann und bei der der Wert des Schwellenwerts von der Leitung und von früheren Werten abhängt.

5. Vorrichtung (5) zur Kompensation der Polarisationsmodendispersion für ein optisches Übertragungssystem mit Sender, Übertragungsstrecke und Empfänger, umfassend
- eine Einrichtung zur Regelung der Polarisation (7);
- eine Einrichtung zur Verzögerung der differenziellen Gruppengeschwindigkeiten (11) orthogonaler Polarisationsmoden;
- einen Abgriff (12) zum Abgreifen eines Teils des Signals an einen Analysator (13), der geeignet ist, einen Polarisationsgrad zu messen;
- eine Regelungseinrichtung (10), die einen zur Berechnung von Parametern geeigneten Algorithmus ausführt, wobei der Ausgang der Regelungseinrichtung (10) mit der Einrichtung zur Regelung der Polarisation (7) verbunden ist;
- [wobei] der Algorithmus geeignet ist, die Berechnung der Parameter für die Einrichtung zur Regelung der Polarisation neu zu starten, wenn ein gemessener Polarisationsgrad unter einem festen Schwellenwert liegt.

## Revendications

1. Procédé de compensation de dispersion modale de polarisation comprenant les étapes suivantes :
- mesurer le degré de polarisation d'un signal au niveau du récepteur
- exécuter un algorithme pour trouver le maximum de degré de polarisation
- comparer le degré de polarisation à des valeurs de référence du système de compensation dans une base de données
- commuter le nouveau point de départ sur le côté opposé de la sphère de Poincaré lorsque la valeur de référence se trouve en dessous d'une valeur de seuil définie
- sélectionner le nouveau point de départ à partir de la base des données.

2. Procédé selon la revendication 1, dans lequel les valeurs de référence du système de compensation sont mesurées et définies dans un mode en différé.

3. Procédé selon la revendication 1, dans lequel le seuil pour redémarrer le calcul de compensation se trouve au-dessus du maximum local.

4. Procédé selon la revendication 1 dans lequel la valeur du maximum local peut changer d'un état de dispersion PMD à un autre, et où la valeur du seuil dépend de la droite et de valeurs précédentes.

5. Dispositif (5) destiné à la compensation d'une dispersion modale de polarisation pour un système de transmission optique comprenant un émetteur, une liaison de transmission et un récepteur, comprenant :
- un moyen destiné à commander la polarisation (7)
- un moyen destiné à retarder les vitesses différentielles de groupe (11) des modes de polarisation orthogonaux
- une prise (12) destinée à prélever une partie du signal à un analyseur (13) conçu pour mesurer un degré de polarisation
- un moyen de commande (10) exécutant un algorithme conçu pour calculer des paramètres où la sortie du moyen de commande (10) est reliée au moyen destiné à commander la polarisation (7) et
- l'algorithme est conçu pour redémarrer le calcul des paramètres pour le moyen de commande de la polarisation lorsqu'un degré mesuré de polarisation se trouve en dessous d'un seuil fixé.
